(19) Europäisches Patentamt / European Patent Office / Office européen des brevets

(11) **EP 3 158 009 B1**

(12) **FASCICULE DE BREVET EUROPEEN**

(45) Date de publication et mention
de la délivrance du brevet:
**08.11.2023 Bulletin 2023/45**

(21) Numéro de dépôt: **15733829.4**

(22) Date de dépôt: **12.06.2015**

(51) Classification Internationale des Brevets (IPC):
**C09D 5/02** *(2006.01)*    **C09D 171/00** *(2006.01)*
**C09D 179/08** *(2006.01)*    **C09D 181/04** *(2006.01)*
**C09D 181/06** *(2006.01)*    **B05D 5/08** *(2006.01)*
**A47J 36/02** *(2006.01)*

(52) Classification Coopérative des Brevets (CPC):
(C-Sets disponibles)
**A47J 36/02; A47J 36/025; B05D 5/08; B05D 5/083;**
**B05D 7/542; C09D 5/024; C09D 7/20; C09D 7/65;**
**C09D 7/69; C09D 127/12; C09D 127/18;**
**C09D 171/00; C09D 179/08; C09D 179/085;**
**C09D 181/04;**        (Cont.)

(86) Numéro de dépôt international:
**PCT/FR2015/051571**

(87) Numéro de publication internationale:
**WO 2015/193594 (23.12.2015 Gazette 2015/51)**

(54) **COMPOSITIONS AQUEUSES DE SEMI-FINI ET DE PRIMAIRE DE REVÊTEMENT ANTIADHÉSIF COMPRENANT DES POLYMÈRES AROMATIQUES**

WÄSSRIGE HALBFERTIGE UND PRIMÄRE ANTIHAFTBESCHICHTUNGSZUSAMMENSETZUNGEN MIT AROMATISCHEN POLYMEREN

AQUEOUS SEMI-FINISHED AND PRIMARY NON-STICK COATING COMPOSITIONS COMPRISING AROMATIC POLYMERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.06.2014 FR 1455723**
              **30.12.2014 FR 1463459**

(43) Date de publication de la demande:
**26.04.2017 Bulletin 2017/17**

(73) Titulaire: **SEB S.A.**
**69130 Ecully (FR)**

(72) Inventeurs:
• **GANTILLON, Barbara**
**F-74320 Leschaux (FR)**
• **JOUTANG, Isabelle**
**F-73290 La Motte Servolex (FR)**
• **TEISSIER, Anne**
**F-74000 Annecy (FR)**

(74) Mandataire: **Regimbeau**
**20, rue de Chazelles**
**75847 Paris Cedex 17 (FR)**

(56) Documents cités:
**EP-A1- 1 103 582**     **WO-A2-99/32565**
**GB-A- 1 592 886**

• **DATABASE WPI Week 200972 Thomson Scientific, London, GB; AN 2009-Q20343 XP002739307, -& JP 2009 242711 A (DAIKIN KOGYO KK) 22 octobre 2009 (2009-10-22)**
• **DATABASE WPI Week 201430 Thomson Scientific, London, GB; AN 2014-D55662 XP002740012, -& CN 103 465 574 A (ZHEJIANG PENGFULONG CHEM CO LTD) 25 décembre 2013 (2013-12-25)**

(52) Classification Coopérative des Brevets (CPC):
(Cont.)
**C09D 181/06;** B05D 7/14; B05D 2202/25;
C08G 2650/40

C-Sets
**C09D 127/18, C08L 79/08;**
**C09D 127/18, C08L 79/08, C08K 3/04;**
**C09D 171/00, C08K 3/04, C08L 27/18**

**Description**

La présente invention concerne de manière générale des compositions aqueuses de revêtement antiadhésif (ou compositions de primaire ou primaires) comprenant des compositions pour revêtement (ou compositions de semi-fini ou semi-finis). Les compositions pour revêtement et les compositions de revêtement antiadhésif selon la présente invention présentent des propriétés améliorées de stabilité en termes de viscosité dans le temps et de filmification. En outre, les revêtements antiadhésifs obtenus à partir de ces compositions présentent une résistance améliorée à la corrosion, aux hautes températures et à l'abrasion, ainsi qu'un jaunissement réduit.

Par composition aqueuse, on entend, au sens de la présente invention, toute composition comprenant en majorité de l'eau, c.à.d. au moins 50 % d'eau en poids par rapport au poids total de ladite composition.

L'invention appartient au domaine de la formulation de primaires de revêtement antiadhésif destinés à être appliqués sur des articles chauffants, et plus particulièrement des articles culinaires ou électroménagers, ainsi qu'au domaine de tels revêtements antiadhésifs.

A titre d'exemples d'articles culinaires utilisables dans le cadre de la présente invention, on peut notamment citer les poêles, les sauteuses, les casseroles, les woks, les crêpières, les fait-tout, les marmites, les cocottes, les rôtissoires à oeufs et les poêles grill.

A titre d'exemples d'articles électroménagers utilisables dans le cadre de la présente invention, on peut notamment citer les cuves de friteuse, les poêlons ou caquelons pour fondue ou raclette, et les semelles de fer à repasser.

Il est notamment connu de l'homme de l'art que les articles culinaires doivent répondre à des critères de performances quant à leur antiadhésivité, leur résistance à la rayure et plus généralement aux multiples agressions auxquelles ils sont soumis en usage.

Les revêtements à base de polymères fluorés sont ceux qui apportent le meilleur compromis pour l'ensemble de ces propriétés. Il subsiste toutefois une difficulté pour l'adhérence de ces revêtements sur le support de l'article et de très nombreuses solutions ont été proposées.

Une part importante des formulations destinées à promouvoir l'adhésion du polytétrafluoroéthylène (PTFE) est réalisée en utilisant une co-résine d'adhésion. Parmi les résines les plus utilisées, on retrouve les polymères aromatiques, tels que les polyéther éther cétones (PEEK), les polyéthercétones (PEK), les polyéthersulfones (PES) et les polysulfures de phénylène (PPS). Pour une utilisation en combinaison avec les dispersions colloïdales de PTFE, ces co-résines d'adhésion doivent nécessairement être préalablement mises en phase aqueuse généralement en présence d'un solvant aprotique polaire.

Par polymère aromatique, on entend, au sens de la présente invention, tout polymère présentant au moins un motif monomère comprenant au moins un système cyclique respectant la règle d'aromaticité d'Hückel.

Il est à noter que la plupart des solvants aprotiques polaires sont soumis à un étiquetage en tant que produit nocif, voire même toxique, dans la réglementation REACH (Règlement du Parlement européen et du Conseil concernant l'enregistrement, l'évaluation et l'autorisation des substances chimiques, ainsi que les restrictions applicables à ces substances). De ce fait, l'impact sur l'environnement et la santé engendré par une telle utilisation est non négligeable.

Par solvant toxique ou nocif, on entend, au sens de la présente invention, un solvant contenant des substances cancérogènes, mutagènes ou reprotoxiques de catégorie 1A et 1B et sur lequel des pictogrammes de dangerosité doivent être apposés pour informer les utilisateurs des risques et dangers associés à ce type de produit (tel que défini par le Règlement CE N° 1272/2008 du Parlement Européen et du Conseil du 16 septembre 2008 et de ses adaptations au progrès scientifique et technique).

Le document EP1 103 582 décrit des compositions aqueuses de revêtement antiadhésif comprenant une résine fluorocarbonée, un polyéther sulfone (PES) et une résine choisie parmi les polyamideimide (PAI) et les polyimides (PI). La taille moyenne des particules de PES, PAI, PI varie de 0,5 à 8 $\mu$m. Un solvant organique polaire tel que la N-méthylpyrrolidone, le diméthylacétamide ou le diméthylformamide est ajouté à la composition pour faciliter la formation d'un film. La teneur en solvant organique polaire peut aller jusqu'à 50% en poids par rapport à l'eau. Elle est supérieure à 15% en poids dans les exemples. EP1 103 582 ne décrit pas l'utilisation de N-formylmorpholine.Le document brevet US 5,910,558 décrit une composition de primaire à base de polymère aromatique (notamment PES ou PEK) en solution dans un solvant aprotique polaire, pouvant être appliquée sur des articles culinaires pour former un revêtement antiadhésif homogène. En particulier, la composition d'US 5,910,558 comprend du PES ou du PEK se présentant sous forme d'une poudre, constituée de grains sphériques, et dont la granulométrie est comprise entre 2 et 70 $\mu$m, et préférentiellement comprise entre 5 et 50 $\mu$m, un solvant aprotique polaire tel que le NMP, et un polymère thermoplastique pouvant être du PTFE. Cette composition est exempte de base de Lewis, mais comporte un taux élevé de solvant aprotique polaire, notamment toxique.

Cependant, les procédés et compositions de ce document demandent l'obtention de particules régulières ce qui est compliqué à mettre en oeuvre, d'autant plus lorsque l'on souhaite obtenir des revêtements de faible épaisseur.

En outre, de telles compositions à taux élevé de solvant aprotique polaire présentent les inconvénients notoires que les compositions obtenues doivent éventuellement être soumises à un étiquetage en tant que composition toxique, et que les compositions obtenues conduisent à des revêtements dont la résistance à l'abrasion est faible et qui présentent une tendance à jaunir.

Le document brevet US 6,333,372 décrit des compositions aqueuses de primaire pour des revêtements fluorés, comprenant une fluororésine, une polyéthersulfone et au moins une résine choisie parmi la PAI et la PI. La taille moyenne des particules de PES et de PAI/PI de 8 $\mu$m ou moins. Le milieu de dispersion du primaire est l'eau, mais un solvant organique, tel que la NMP, peut être ajouté à des taux élevés dans la composition.

Cependant, de telles compositions présentent des teneurs en solvant aprotique polaire élevées ce qui entraine des difficultés de stabilité, en terme de viscosité, dans le temps des compositions de semi-fini et de primaire obtenues.

Pour pallier aux inconvénients de l'art antérieur, la demanderesse a mis au point des compositions aqueuses de semi-fini et de primaire présentant des propriétés améliorées de stabilité dans le temps et améliorant la filmification des couches déposées, et permettant en outre d'obtenir des revêtements présentent une résistance améliorée à la corrosion, aux hautes températures et à l'abrasion, ainsi qu'un jaunissement réduit.

La présente invention a pour objet une composition aqueuse de revêtement antiadhésif (ou composition aqueuse de primaire) exempte d'amines qui comprend une composition aqueuse pour revêtement et au moins une résine fluorocarbonée, la composition de revêtement antiadhésif comprenant une teneur en solvant aprotique polaire supérieure à 0% et inférieure ou égale à 15 % en poids par rapport au poids total de la composition de revêtement antiadhésif, ledit solvant aprotique polaire étant la N-formylmorpholine. La composition aqueuse de revêtement antiadhésif est telle que décrite à la revendication 1.

La composition aqueuse pour revêtement (ou composition de semi-fini) exempte d'amines, comprend :

- au moins un polymère aromatique sélectionné dans le groupe comprenant les polyéthersulfones (PES), les polyétheréthersulfones (PEES), les polyphénylesulfones (PPSU), les polysulfures de phénylène (PPS), les polyétheréthercétones (PEEK), les polyéthercétones (PEK), les polyéthercétonecétones (PEKK), les polyétheréthercétonecétones (PEEKK), les polyéthercétoneéthercétonecétones (PEKEKK), et les dérivés de ceux-ci, et éventuellement

  - un solvant aprotique polaire, la teneur en solvant aprotique polaire dans la composition pour revêtement étant comprise entre 0 % et 25 % en poids par rapport au poids total de la composition pour revêtement ;

le ou les polymères aromatiques se présentant sous la forme de poudre ayant un d90 inférieur ou égal à 20 $\mu$m.

Une telle teneur en solvant aprotique polaire permet d'obtenir des compositions de semi-fini présentant une bonne stabilité en termes de viscosité et de bonnes propriétés de filmification.

En outre, une telle granulométrie permet d'obtenir des revêtements de faibles épaisseurs résistants à l'abrasion. De plus, cette granulométrie permet de renforcer l'atténuation de l'effet de sédimentation dans la composition de semi-fini.

Par d90, on entend, au sens de la présente invention, la dimension telle que 90 % en volume de la population est constitué de particules de taille inférieure à ladite dimension.

Par d50, on entend, au sens de la présente invention, la dimension telle que 50 % en volume de la population est constitué de particules de taille inférieure à ladite dimension (médiane de la répartition particulaire).

Le ou les polymères aromatiques se présentent sous forme de poudre ayant un d50 minimum de 3 $\mu$m et un d90 minimum de 10 $\mu$m.

La composition de semi-fini est exempte d'amines.

Par amine, on entend, au sens de la présente invention, tout composé azoté qui dérive formellement de l'ammoniac $NH_3$ par remplacement d'un ou plusieurs atomes d'hydrogène par des groupes carbonés, tel que les amines primaires, les amines secondaires, les amines tertiaires, les amines hétérocycliques, les diamines aliphatiques, les oligoamines aliphatiques, les étheramines, les éthanolamines, les isopropanolamines et les alkyls aminoalcool.

Avantageusement, la composition de semi-fini comprend entre 0 et 21 % en poids de solvant aprotique polaire par rapport au poids total de la composition de semi-fini.

En vue de l'obtention de compositions de primaire non étiquetées (c'est-à-dire non toxiques), il est nécessaire que la concentration en solvant aprotique polaire toxique, dit étiqueté, soit la plus faible possible, voire même qu'elle soit nulle. En outre, le fait de n'incorporer dans la composition de semi-fini qu'une faible quantité d'un tel solvant limite le jaunissement du revêtement. Outre le jaunissement, une teneur élevée en ces solvants aprotiques polaires toxiques est inutilement couteuse.

Le solvant aprotique polaire est non toxique, et est la N-formylmorpholine (NFM).

Avantageusement, le degré de polymérisation du ou des polymères aromatiques précités est supérieur ou égal à 5. Par degré de polymérisation d'un polymère, on entend, au sens de la présente invention, le nombre de répétitions du ou des motifs de base dans ce polymère.

La composition pour revêtement telle que décrite ci-dessus peut comprendre en outre au moins un polymère hétérocyclique se présentant sous forme de poudre ayant un $d_{90}$ inférieur ou égal à 20 $\mu$m, la teneur relative en poids du polymère aromatique par rapport au polymère hétérocyclique dans la composition pour revêtement étant supérieure ou égale à 50:50 et inférieure à 100:0, et de préférence supérieure ou égale à 88:12 et inférieure ou égale à 100:0.

Par polymère hétérocyclique, on entend, au sens de la présente invention, tout polymère présentant au moins un motif monomère comprenant au moins un hétérocycle. Par hétérocycle, on entend, au sens de la présente invention, tout cycle ayant en tant qu'atomes membres du cycle au moins deux éléments différents.

Le ou les polymères hétérocycliques peuvent avantageusement posséder chacun un indice d'acide compris entre 1 et 200 mg de KOH/g.

Avantageusement, ce ou ces polymères hétérocycliques sont sélectionnés dans le groupe comprenant les polyimides (PI), les polyamide-imides (PAI), les polyétherimides (PEI), les polyamide-acides amiques et leurs mélanges. Ces polymères présentent une tenue thermique élevée et une bonne dureté que l'on peut associer aux motifs aromatiques de leur structure.

Avantageusement, le degré de polymérisation du ou des polymères hétérocycliques précités est supérieur ou égal à 5.

Avantageusement, la combinaison d'un tel polymère hétérocyclique au polymère aromatique décrit ci-dessus permet d'améliorer encore davantage l'adhérence des revêtements obtenus sur des supports.

La présente invention a également pour objet une composition aqueuse de revêtement antiadhésif (ou composition aqueuse de primaire) exempte d'amines, qui comprend une composition aqueuse pour revêtement et au moins une résine fluorocarbonée, la composition de revêtement antiadhésif comprenant une teneur en solvant aprotique polaire supérieure à 0% et inférieure ou égale à 15 % en poids par rapport au poids total de la composition de revêtement antiadhésif.

La composition aqueuse pour revêtement utilisée dans la composition de revêtement antiadhésif comprend :

- au moins un polymère aromatique sélectionné dans le groupe comprenant les polyéthersulfones (PES), les polyétheréthersulfones (PEES), les polyphénylesulfones (PPSU), les polysulfures de phénylène (PPS), les polyétheréthercétones (PEEK), les polyéthercétones (PEK), les polyéthercétonecétones (PEKK), les polyétheréthercétonecétones (PEEKK), les polyéthercétoneéthercétonecétones (PEKEKK), et les dérivés de ceux-ci, et se présentant sous la forme de poudre ayant un d90 inférieur ou égal à 20 $\mu$m ; et éventuellement
- un solvant aprotique polaire, la teneur en solvant aprotique polaire dans la composition pour revêtement étant comprise entre 0 % et 25 % en poids par rapport au poids total de la composition pour revêtement.

Le polymère aromatique est tel que décrit en référence à la composition aqueuse pour revêtement décrite ci-dessus.

De préférence, la composition de primaire selon l'invention comprend entre 8 et 15 % en poids de solvant aprotique polaire par rapport au poids total de ladite composition de primaire.

Le solvant aprotique polaire est non toxique. Le solvant aprotique polaire est la N-formylmorpholine (NFM). Le fait d'incorporer un solvant aprotique polaire non toxique dans la composition permet d'obtenir une composition de primaire non étiquetée (en d'autres termes, non toxique).

Ainsi, les risques et dangers liés à l'environnement et à la santé d'autrui sont limités. En outre, l'utilisation des formulations non toxiques est considérablement facilitée car ces formulations peuvent être mises en oeuvre avec seulement un minimum de précautions.

Avantageusement, la ou les résines fluorocarbonées sont choisies dans le groupe comprenant le polytétrafluoroéthylène (PTFE), les copolymères de tétrafluoroéthylène et de perfluoropropylvinyléther (PFA), les copolymères de tétrafluoroéthylène et d'hexafluoropropène (FEP), le polyfluorure de vinylidène (PVDF), les copolymères de tétrafluoroéthylène et de polyméthylvinyléther (MVA), les terpolymères de tétrafluoroéthylène, de polyméthylvinyléther et de fluoroalkylvinyléther (TFE/PMVE/FAVE), l'éthylène tétrafluoroéthylène (ETFE), et leurs mélanges.

De manière avantageuse, la résine fluorocarbonée est le polytétrafluoroéthylène (PTFE), ou un mélange de PTFE et de PFA (PTFE/PFA), ou un mélange de PTFE et de FEP (PTFE/FEP).

Avantageusement, la résine fluorocarbonée représente 1 à 99 % en poids, et de préférence 30 à 80 % en poids, du poids total sec de la composition de primaire.

Dans le cas où la composition de primaire ne comprend pas de polymère hétérocyclique tel que précité, la teneur relative en poids du polymère aromatique par rapport à la résine fluorocarbonée est comprise entre 20:80 et 25:75.

Dans le cas où la composition de primaire comprend au moins un polymère hétérocyclique tel que précité, la teneur totale relative en poids du polymère aromatique et du polymère hétérocyclique par rapport à la résine fluorocarbonée est comprise entre 20:80 et 25:75.

Avantageusement, la composition de primaire selon l'invention comprend en outre au moins une charge.

Avantageusement, la charge représente moins de 40 % en poids, et de préférence de 3 à 20 % en poids, du poids total sec de la composition de primaire.

Avantageusement, la charge comprend des nanoparticules de silice et/ou des nanoparticules d'alumine et/ou des nanoparticules de carbure silicium.

Un procédé de préparation d'une composition aqueuse pour revêtement telle que définie précédemment comprend les étapes suivantes :

a) la fourniture d'au moins un polymère aromatique sous forme de poudre, le polymère aromatique étant sélectionné dans le groupe comprenant les polyéthersulfones (PES), les polyétheréthersulfones (PEES), les polyphénylesulfones (PPSU), les polysulfures de phénylène (PPS), les polyétheréthercétones (PEEK), les polyéthercétones (PEK), les polyéthercétonecétones (PEKK), les polyétheréthercétonecétones (PEEKK), les polyéthercétoneéthercétonecétones (PEKEKK), et les dérivés de ceux-ci,

b) la préparation d'un mélange comprenant de l'eau et la poudre de l'étape a), et

c) le broyage du mélange issu de l'étape b) pour obtenir un mélange broyé comprenant le polymère aromatique sous forme de poudre dont le d90 est inférieur ou égal à 20 $\mu$m, dans lequel du solvant aprotique polaire est ajouté lors de la préparation de l'étape b) et/ou au mélange broyé issu de l'étape c), la teneur en solvant aprotique polaire dans la composition pour revêtement étant supérieure à 0 % et inférieure ou égale à 25 % en poids par rapport au poids total de ladite composition.

Selon un mode de réalisation du procédé de préparation d'une composition de semi-fini, le procédé comprend en outre une étape a') de fourniture d'au moins un polymère hétérocyclique sous forme de poudre, et dans lequel :

- le mélange issu de l'étape b) comprend en outre la poudre de l'étape a'), et
- le broyage de l'étape c) permet d'obtenir un mélange broyé comprenant le polymère aromatique et ledit polymère hétérocyclique sous forme de poudre ayant un d90 inférieur ou égal à 20 $\mu$m, et
- la teneur relative en poids du polymère aromatique par rapport au polymère hétérocyclique dans le mélange broyé issu de l'étape c) est supérieure ou égale à 50:50 et inférieure à 100:0.

Selon un autre mode de réalisation du procédé de préparation d'une composition de semi-fini, le procédé comprend en outre les étapes suivantes :

a') la fourniture d'au moins un polymère hétérocyclique sous forme de poudre,

b') la préparation d'un mélange comprenant de l'eau et la poudre de l'étape a'),

c') le broyage du mélange issu de l'étape b') pour obtenir un mélange broyé comprenant ledit polymère hétérocyclique sous forme de poudre ayant un d90 inférieur ou égal à 20 $\mu$m, et

d) le mélange du mélange broyé issu de l'étape c) et du mélange broyé issu de l'étape c'),

la teneur relative en poids du polymère aromatique par rapport au polymère hétérocyclique dans le mélange issu de l'étape d) étant supérieure ou égale à 50:50 et inférieure à 100:0.

Avantageusement, dans le procédé de préparation d'une composition de semi-fini selon cet autre mode de réalisation, du solvant est ajouté :

- lors de la préparation de l'étape b'), et/ou
- au mélange broyé issu de l'étape c'), et/ou
- au mélange issu de l'étape d).

Un procédé de préparation d'une composition aqueuse pour revêtement telle que définie précédemment comprenant au moins un polymère aromatique comprend les étapes suivantes :

a) la fourniture d'au moins un polymère aromatique sélectionné dans le groupe comprenant les polyéthersulfones (PES), les polyétheréthersulfones (PEES), les polyphénylesulfones (PPSU), les polysulfures de phénylène (PPS), les polyétheréthercétones (PEEK), les polyéthercétones (PEK), les polyéthercétonecétones (PEKK), les polyétheréthercétonecétones (PEEKK), les polyéthercétoneéthercétonecétones (PEKEKK), et les dérivés de ceux-ci sous forme de poudre,

a') la fourniture d'au moins un polymère hétérocyclique sous forme de poudre,

b) la préparation d'un mélange comprenant de l'eau et la poudre de l'étape a),

e) le broyage du mélange issu de l'étape b) pour obtenir un mélange broyé comprenant le polymère aromatique,

f) la préparation d'un mélange comprenant le mélange broyé issu de l'étape e) et la poudre de l'étape a'), et

g) le broyage du mélange issu de l'étape f) pour obtenir un mélange broyé comprenant le polymère hétérocyclique et ledit polymère aromatique sous forme de poudre ayant un d90 inférieur ou égal à 20 $\mu$m,

la teneur relative en poids du polymère aromatique par rapport au polymère hétérocyclique dans le mélange issu de l'étape g) étant supérieure ou égale à 50:50 et inférieure à 100:0 ;
dans lequel du solvant aprotique polaire est ajouté :

- lors de la préparation de l'étape b), et/ou
- au mélange broyé issu de l'étape e), et/ou
- lors de la préparation de l'étape f), et/ou
- au mélange broyé issu de l'étape g),

la teneur en solvant aprotique polaire dans la composition pour revêtement étant supérieure à 0 % et inférieure ou égale à 25 % en poids par rapport au poids total de ladite composition de semi-fini.

Un autre procédé de préparation d'une composition aqueuse pour revêtement comprenant au moins un polymère aromatique telle que définie précédemment comprend les étapes suivantes :

a) la fourniture d'au moins un polymère aromatique sélectionné dans le groupe comprenant les polyéthersulfones (PES), les polyétheréthersulfones (PEES), les polyphénylesulfones (PPSU), les polysulfures de phénylène (PPS), les polyétheréthercétones (PEEK), les polyéthercétones (PEK), les polyéthercétonecétones (PEKK), les polyétheréthercétonecétones (PEEKK), les polyéthercétoneéthercétonecétones (PEKEKK), et les dérivés de ceux-ci sous forme de poudre,
a') la fourniture d'au moins un polymère hétérocyclique sous forme de poudre,
b') la préparation d'un mélange comprenant de l'eau et la poudre de l'étape a'),
e') le broyage du mélange issu de l'étape b') pour obtenir un mélange broyé comprenant le polymère hétérocyclique,
f') la préparation d'un mélange comprenant le mélange broyé issu de l'étape e') et la poudre de l'étape a), et
g') le broyage du mélange issu de l'étape f') pour obtenir un mélange broyé comprenant le polymère hétérocyclique et le polymère aromatique sous forme de poudre ayant un d90 inférieur ou égal à 20 $\mu$m,

la teneur relative en poids du polymère aromatique par rapport au polymère hétérocyclique dans le mélange issu de l'étape g') étant supérieure ou égale à 50:50 et inférieure à 100:0 ;
dans lequel du solvant aprotique polaire est ajouté :

- lors de la préparation de l'étape b'), et/ou
- au mélange broyé issu de l'étape e'), et/ou
- lors de la préparation de l'étape f'), et/ou
- au mélange broyé issu de l'étape g'),

la teneur en solvant aprotique polaire dans la composition pour revêtement étant supérieure à 0 % et inférieure ou égale à 25 % en poids par rapport au poids total de ladite composition de semi-fini.

Avantageusement, le broyage dans l'un quelconque des procédés de préparation d'une composition de semi-fini est un broyage mécanique à température ambiante ou un broyage ultrasonique.
La présente invention a également pour objet un procédé de préparation d'une composition aqueuse de revêtement antiadhésif telle que définie précédemment comprenant le mélange d'au moins une résine fluorocarbonée avec la composition aqueuse pour revêtement telle que définie précédemment ou telle que préparée selon l'un quelconque des procédés de préparation d'une composition pour revêtement tel que définis précédemment ou une composition aqueuse pour revêtement comprenant :

- au moins un polymère aromatique sélectionné dans le groupe comprenant les polyéthers sulfones (PES), les polyéthers éthers sulfones (PEES), les polyphényles sulfones (PPSU), les polysulfures de phénylène (PPS), les polyéthers éthers cétones (PEEK), les polyéthers cétones (PEK), les polyéthers cétones cétones (PEKK), les polyéthers éthers cétones cétones (PEEKK), les polyéthers cétones éthers cétones cétones (PEKEKK) et les dérivés de ceux-ci, et se présentant sous forme de poudre ayant un $d_{90}$ inférieur ou égal à 20 $\mu$m et un $d_{50}$ minimum de 3 $\mu$m où $d_{90}$ s'entend de la dimension telle que 90 % en volume de la population est constitué de particules de taille inférieure à ladite dimension et $d_{50}$ s'entend de la dimension telle que 50 % en volume de la population est constitué de particules de taille inférieure à ladite dimension; et
- un solvant aprotique polaire, ledit solvant aprotique apolaire étant la N-formylmorpholine la teneur en solvant aprotique polaire dans la composition pour revêtement étant comprise entre 0 et 25 % en poids par rapport au poids total de la composition pour revêtement.

7

La ou les résines fluorocarbonées peuvent être sous forme de poudre ou en dispersion aqueuse.

La présente invention a également pour objet un procédé de fabrication d'un article comprenant les étapes suivantes :

i. la fourniture d'un substrat métallique présentant deux faces opposées

ii. l'application, sur l'une des faces dudit substrat, d'au moins une couche de composition aqueuse de semi-fini telle définie précédemment ou telle que préparée selon l'un quelconque des procédés de préparation d'une composition pour revêtement tel que définis précédemment ou d'au moins une couche de composition aqueuse de primaire telle définie précédemment ou telle que préparée selon le procédé de préparation d'une composition de revêtement antiadhésif tel que défini précédemment ; puis

iii. la cuisson de l'ensemble à une température comprise entre 300°C et 430°C.

Avantageusement, le procédé de fabrication d'un article selon l'invention, peut en outre comprendre, entre les étapes d'application ii) et de cuisson iii), l'application, sur ladite couche de composition de semi-fini ou de composition de primaire, d'au moins une couche de composition de finition comprenant au moins une résine fluorocarbonée.

L'article peut être un article culinaire dont l'une des faces constitue une face interne concave destinée à être en contact avec des aliments placés à l'intérieur dudit article et l'autre face est une face externe convexe destinée à être en contact avec une source de chaleur.

L'invention est illustrée plus en détail dans les exemples suivants.

## EXEMPLES

### Produits

### Supports

- Supports en aluminium lisses simplement dégraissés

### Compositions aqueuses de semi-fini

- Résines polymères :

  ◦ résine de polysulfure de phénylène (PPS), dont le degré de polymérisation est de 100
  ◦ résine polyéthersulfone (PES), grade micronisé dont le degré de polymérisation est supérieur à 50

- Résine polymère hétérocyclique :

  ◦ polyamide-acide amique sous forme de poudre humide aqueuse à 35,5 % d'extrait sec et contenant moins de 5 % en poids de N-méthylpyrrolidone (NMP), de grade alimentaire et dont le degré de polymérisation est de l'ordre de 8

- Résine acrylique : solution de polymère acrylique à 30 % en phase aqueuse
- Solvants aprotiques polaires non étiquetés (c'est-à-dire non toxiques au sens de la présente invention) :

  ◦ N-formylmorpholine (NFM)

- Hydroxyde d'ammonium NH4OH (d=0,9)

### Compositions aqueuses de primaire

- Solvants aprotiques polaires non étiquetés (c'est-à-dire non toxiques au sens de la présente invention) :

∘ N-formylmorpholine (NFM)

- Solvants aprotiques polaires étiquetés (c'est-à-dire toxiques au sens de la présente invention) :

∘ N-éthylpyrrolidone (NEP)

- Charge : silice colloïdale non modifiée en surface avec une surface spécifique de 220 $m^2/g$ environ et qui se présente sous forme de dispersion aqueuse de nanoparticules avec un extrait sec de 30 %
- Dispersion de noir de carbone à 25 % d'extrait sec
- Dispersion de PTFE à 60 % d'extrait sec
- Système tensioactif non-ionique à base d'alkylphénol éthoxylé à 13 % d'extrait sec

## Tests

Détermination de l'extrait sec d'une composition aqueuse de semi-fini ou de primaire

### PRINCIPE

L'extrait sec d'un produit est la partie solide résiduelle restant après évaporation des matières volatiles qu'il contient. La température et la durée de séchage jouent un grand rôle car les solvants à point d'ébullition élevé, les fractions de monomères, les diluants réactifs et les sous-produits de réaction (selon leur degré de rétention) quittent très lentement le film en formation. Il est donc très important de définir de façon très conventionnelle des conditions de séchage normalisées, aussi proches que possible de la pratique.

### MODE OPERATOIRE

Pour mesurer cet extrait sec, on procède de la manière suivante :

- on pèse une coupelle en aluminium : $m_0$ = masse de la coupelle ;
- on dispose entre 0,5 g et 3 g de produit à étudier dans cette coupelle ;
- on pèse la coupelle remplie : $m_1$ = masse de la coupelle remplie ;
- on place la coupelle dans une étuve à 210°C pendant deux heures ;
- après étuvage et après refroidissement, on pèse la coupelle : $m_2$ = masse de la coupelle remplie après étuvage et refroidissement ;
- l'extrait sec est donné par la formule ci-dessous :

$$\text{Extrait sec} = 100*[(m_2-m_0)/(m_1-m_0)]$$

Mesure de la taille et de la distribution de tailles des particules par diffraction de la lumière pour des poudres de taille comprise entre environ 100 nm et environ 5 mm

A la fin du broyage des produits de la présente invention, la poudre broyée est récupérée et sa granulométrie caractérisée à l'aide d'un granulomètre à diffraction laser commercialisé sous la dénomination commerciale Mastersizer de la société Malvern.

Evaluation de l'adhérence d'une couche de semi-fini ou de primaire sur un substrat en aluminium lisse

On effectue un test par quadrillage selon la norme ISO 2409, suivi d'une immersion de l'article revêtu pendant 18 heures (consistant en une alternance de 3 cycles de 3 heures dans de l'eau bouillante et de 3 cycles de 3 heures dans l'huile à 200°C). Puis, on observe si le revêtement antiadhésif présente ou non un décollement.
La cotation est la suivante :

• aucun carré ne doit être décollé pour obtenir une cotation de 100 (adhérence excellente) ;
• en cas de décollement, la valeur relevée est égale à la cotation de 100 diminuée du nombre de carrés décollés.

Evaluation du jaunissement

Le jaunissement après cuisson des plaquettes revêtues est évalué visuellement par comparaison inter-plaquettes.

Evaluation de la stabilité de la viscosité des compositions de semi-fini et de primaire

Il s'agit d'évaluer la stabilité de la viscosité des compositions de semi-fini et de primaire appliquées par pulvérisation en mesurant les temps d'écoulement selon la norme DIN EN ISO 2433/ASTM D5125 au moyen d'une coupe 2,5 ou d'une coupe 4.

- La viscosité correspond au temps d'écoulement continu exprimé en secondes du volume de la coupe à travers l'orifice calibré. Le choix de la coupe est fait en fonction de la viscosité supposée du produit.
- Le suivi de l'évolution de la viscosité est réalisé par la mesure du temps d'écoulement continu du volume normalisé et à température ambiante tout de suite après la préparation des compositions, et par le suivi de l'évolution de cette viscosité dans le temps à température ambiante.
- Les compositions une fois formulées sont mises en étuve à 40°C ; le suivi dans le temps de l'évolution du temps d'écoulement, et donc de la viscosité (évaluation de la stabilité de l'émulsion après vieillissement à 40°C), est alors réalisé.

Les compositions de semi-fini et de primaire sont évaluées comme conforme lorsqu'elles ne présentent pas de décantation et présentent une viscosité stable, c.à.d. une viscosité qui n'augmente de plus de 20 % pendant 2 mois de stockage à température ambiante.

Evaluation des propriétés de filmification des compositions de semi-fini et de primaire

Les propriétés de filmification des compositions sont à lier à la résistance à la corrosion de la couche obtenue à partir de ladite composition. Ainsi, une composition possédant de bonnes propriétés de filmification va permette de napper parfaitement le support lors de l'application et fournir ainsi une couche ayant de bonnes performances en termes de corrosion.

On évalue la résistance à la corrosion d'un revêtement sur un substrat en aluminium sablé, en évaluant sa résistance à la diffusion du sel vers le substrat métallique qui corrode.

Pour cela on procède comme suit :

- le substrat est revêtu d'une couche de composition de semi-fini et de primaire selon les exemples et les exemples comparatifs ci-dessous ;
- le substrat ainsi revêtu est immergé, pendant 20 heures, dans une solution aqueuse saline portée à ébullition (cette solution saline comporte 10 % en poids de chlorure de sodium. Le protocole de ce test est celui défini dans la norme AFNOR NF D21-511 $ 3.3.5.) ;
- à l'issue de chaque immersion, on réalise un contrôle visuel de l'aspect final du revêtement, qui consiste à noter la présence ou l'absence de traces de corrosion (par une observation visuelle à l'œil nu ou à la loupe binoculaire). Il s'agit en pratique de déceler la présence éventuelle de traces telles que des cloques avec étendue des zones, des traces blanches sous le revêtement ;
- cette observation est suivie d'un test par quadrillage selon la norme ISO 2409.

La cotation du test par quadrillage est la suivante :

- aucun carré ne doit être décollé pour obtenir une cotation de 100 (adhérence excellente) ;
- en cas de décollement, la valeur relevée est égale à la cotation de 100 diminuée du nombre de carrés décollés.

Principe de fonctionnement du broyeur en jarre (broyage mécanique)

**PRINCIPE**

Le broyage à billes consiste à charger une jarre avec l'échantillon à broyer et des billes dites de broyage et à faire tourner la jarre autour de son axe à une certaine vitesse. La rotation de la jarre s'effectue généralement à l'aide d'une machine à rouleaux. L'échantillon peut être broyé sous forme sèche ou dispersée dans un solvant approprié (par ex. dans l'eau ou dans l'alcool). La dispersion peut également contenir certains adjuvants (comme un dispersant ou un anti-mousse).

## DEFINITION DES PRINCIPAUX PARAMETRES DE BROYAGE

- Choix des billes de broyage (volume et diamètre(s))

Le diamètre moyen des billes de broyage doit être adapté à la dimension des particules à broyer. Plus les particules sont fines, plus le diamètre des billes à utiliser sera petit. Le volume total de billes, y compris les vides entre les billes, représentera environ 50-60 % du volume intérieur de la jarre. Les billes de tailles différentes sont avantageusement réparties selon la proportion pondérale suivante par rapport au poids total des billes : 25 % de petites billes, 50 % de billes moyennes et 25 % de grosses billes. La dimension des billes les plus petites est comprise entre 2 et 10 mm. L'alumine et la zircone stabilisée sont couramment utilisées comme matériau des billes.

- Volume de matière dans le broyeur

Afin de limiter l'usure des billes de broyage, la charge à broyer doit recouvrir totalement la charge de billes. En général, elle représentera un volume correspondant à environ 25 % du volume de la jarre.

Si la charge à broyer est une poudre sèche, le volume des billes sera ajusté après quelques minutes de broyage. Le broyage réduisant la taille des particules ainsi que le volume des vides entre particules, il est nécessaire de contrôler périodiquement si le volume de charge à broyer est suffisant pour recouvrir toutes les billes. Si cela n'est plus le cas, il est nécessaire de retirer l'excès de billes afin de limiter au maximum la contamination de la poudre.

La durée du broyage dépend de la nature de la résine polymère à broyer et de la taille de particule finale souhaitée.

Principe de fonctionnement du broyeur Discontimill®

Ce broyage est un broyage mécanique qui consiste à réduire la taille des particules et des grains de différents types de matériaux pendant lequel la suspension des particules et grains est maintenue sous refroidissement.

Les opérations de broyage sont effectuées avec un broyeur planétaire. Celui-ci est constitué d'un disque sur lequel sont fixées deux jarres de broyage d'une contenance de 45mL chacune et pouvant accueillir jusqu'à 7 billes de broyage de 15 mm de diamètre. Les jarres et les billes de broyage sont en oxyde de zirconium, matériau réputé pour sa très grande résistance aux chocs et à l'usure autorisant des broyages de durée prolongée.

Le système de broyage fonctionne en faisant tourner le disque porteur et les jarres autour de leur axe propre. La vitesse de rotation est identique pour le plateau et les jarres, pouvant varier de 100 tr/min à 800 tr/min. En revanche, les sens de rotation sont opposés de façon à générer des forces centrifuges antagonistes.

## EXEMPLE 1 d'une composition aqueuse de semi-fini (SF1) :

**Préparation d'une composition aqueuse de semi-fini selon l'invention SF1, avec du solvant aprotique polaire et sans amine.**

On réalise une composition aqueuse de semi-fini SF1 comportant les composés suivants, leurs quantités respectives étant indiquées ci-après :

| | |
|---|---|
| - Polyéthersulfone (100 % d'extrait sec) | : 119,1 g |
| - NFM | : 136,0 g |
| - Eau déminéralisée | : 402,0 g |
| - Ammoniaque | : 4,7 g |
| - Résine acrylique | : 9,0 g |
| - TOTAL | : 670,8 g |

Pour réaliser la composition aqueuse de semi-fini SF1, on utilise une poudre initiale de polyéthersulfone dont la granulométrie varie de 20 $\mu$m à 10 mm, et plus particulièrement un d90 compris entre 40 et 60 $\mu$m et un d50 compris entre 20 et 40 $\mu$m.

La mise en suspension de la PES comprend une étape de broyage, le broyage étant réalisé dans un broyeur à billes de marque Discontimill®, à température ambiante pendant une durée pouvant varier entre 15 et 30 heures, de préférence entre 12 et 24 heures pour réduire la taille des particules de PES.

On procède comme suit :

- la poudre de polyéthersulfone est introduite dans le broyeur ; puis

- l'eau déminéralisée et le solvant aprotique polaire sont ajoutés dans le broyeur ;

- la résine acrylique, puis l'ammoniaque sont ensuite ajoutés dans le broyeur ; et enfin

- on procède à l'étape de broyage.

Les propriétés de la composition aqueuse SF1 ainsi obtenue sont les suivantes :

- extrait sec théorique : 18,2 %
- extrait sec mesuré dans la composition : 18,1 %
- Il s'agit d'une suspension de couleur blanche opaque.
- Le pH de cette composition est compris entre 6 et 7.
- Viscosité (en coupe 4 selon la norme DIN EN ISO 2433/ASTM D5125) > 30 s : après mise en vieillissement à 40°C, la composition SF1 est toujours stable après 60 jours de stockage, et l'évolution dans le temps de la viscosité est inférieure à 20 %.
- La détermination de la taille des particules par diffraction de la lumière à l'aide du granulomètre laser Mastersizer montre que l'on obtient un pic principal en d50 centré sur un diamètre moyen de 5 à 10 $\mu$m et un d90 de 19 $\mu$m, ce qui confirme la mise en suspension de la totalité de la poudre.

**EXEMPLE 2 d'une composition aqueuse de semi-fini (SF2)** :

**Préparation d'une composition aqueuse de semi-fini selon l'invention SF2, avec du solvant aprotique polaire et sans amine.**

On réalise une composition aqueuse de semi-fini SF2 comportant les composés suivants, leurs quantités respectives étant indiquées ci-après :

| | |
|---|---|
| - Polyéthersulfone (100 % d'extrait sec) | : 119,1 g |
| - NFM | : 100,0 g |
| - Eau déminéralisée | : 438,0 g |
| - Ammoniaque | : 4,7 g |
| - Résine acrylique | : 9,0 g |
| - TOTAL | : 670,8 g |

Pour réaliser la composition aqueuse de semi-fini SF2, on utilise une poudre initiale de polyéthersulfone dont la granulométrie varie de 20 $\mu$m à 10 mm, et plus particulièrement un d90 compris entre 40 et 60 $\mu$m et un d50 compris entre 20 et 40 $\mu$m.

La mise en suspension de la PES comprend une étape de broyage, le broyage étant réalisé dans un broyeur à billes de marque Discontimill®, à température ambiante pendant une durée pouvant varier entre 15 et 30 heures, de préférence entre 12 et 24 heures pour réduire la taille des particules de PES.

On procède comme suit :

- la poudre de polyéthersulfone est introduite dans le broyeur ; puis
- l'eau déminéralisée et le solvant aprotique polaire sont ajoutés dans le broyeur ;
- la résine acrylique, puis l'ammoniaque sont ensuite ajoutés dans le broyeur ; et enfin
- on procède à l'étape de broyage.

Les propriétés de la composition aqueuse SF2 ainsi obtenue sont les suivantes :

- extrait sec théorique : 18,2 %
- extrait sec mesuré dans la composition : 18,1 %

- Il s'agit d'une suspension de couleur blanche opaque.
- Le pH de cette composition est compris entre 6 et 7.
- Viscosité (en coupe 4 selon la norme DIN EN ISO 2433/ASTM D5125) > 30 s : après mise en vieillissement à 40°C, la composition SF2 est toujours stable après 60 jours de stockage, et l'évolution dans le temps de la viscosité est inférieure à 20 %.
- La détermination de la taille des particules par diffraction de la lumière à l'aide du granulomètre laser Mastersizer montre que l'on obtient un pic principal en d50 centré sur un diamètre moyen de 5 à 10 $\mu$m et un d90 de 19 $\mu$m, ce qui confirme la mise en suspension de la totalité de la poudre.

**EXEMPLE 3 d'une composition aqueuse de semi-fini (SF3)** :

**Préparation d'une composition aqueuse de semi-fini selon l'invention SF3, avec du solvant aprotique polaire et avec amine.**

On réalise une composition aqueuse de semi-fini SF3 comportant les composés suivants, leurs quantités respectives étant indiquées ci-après :

| | |
|---|---|
| - Polyéthersulfone (100 % d'extrait sec) | : 89,3 g |
| - Polysulfure de phénylène (100 % d'extrait sec) | : 29,8 g |
| - NFM | : 100,0 g |
| - Eau déminéralisée | : 438,0 g |
| - Ammoniaque | : 4,7 g |
| - Résine acrylique | : 9,0 g |
| - TOTAL | : 670,8 g |

Pour réaliser la composition aqueuse de semi-fini SF3, on utilise un mélange de poudre de polyéthersulfone et de polysulfure de phénylène.

La mise en suspension de ce mélange de poudre comprend une étape de broyage, le broyage étant réalisé dans un broyeur à billes de marque Discontimill®, à température ambiante pendant une durée pouvant varier entre 15 et 30 heures, de préférence entre 12 et 24 heures pour réduire la taille des particules du mélange de résines.

On procède comme suit :

- la poudre de polyéthersulfone, puis l'ammoniaque sont introduits dans le broyeur ; puis
- la poudre de polysulfure de phénylène est introduite dans le broyeur ;
- l'eau déminéralisée et le solvant aprotique polaire sont ajoutés dans le broyeur ;
- la résine acrylique est ensuite ajoutée dans le broyeur ; et enfin
- on procède à l'étape de broyage.

Les propriétés de la composition aqueuse SF3 ainsi obtenue sont les suivantes :

- extrait sec théorique : 18,2 %
- extrait sec mesuré dans la composition : 18,3 %
- Il s'agit d'une suspension de couleur blanche opaque.
- Le pH de cette composition est compris entre 6 et 7.
- Viscosité (en coupe 4 selon la norme DIN EN ISO 2433/ASTM D5125) > 30 s : après mise en vieillissement à 40°C, la composition SF3 est toujours stable après 60 jours de stockage, et l'évolution dans le temps de la viscosité est inférieure à 20 %.
- La détermination de la taille des particules par diffraction de la lumière à l'aide du granulomètre laser Mastersizer montre que l'on obtient un pic principal en d50 centré sur un diamètre moyen de 5 à 10 $\mu$m et un d90 de 19 $\mu$m, ce qui confirme la mise en suspension de la totalité de la poudre.

**EXEMPLE COMPARATIF 1 d'une composition aqueuse de semi-fini (SFC1)** :

**Préparation d'une composition aqueuse de semi-fini SFC1 sans solvant aprotique polaire, ni amine, mais avec une taille de particule d90 supérieure à 40 $\mu$m.**

On réalise une composition aqueuse de semi-fini SFC1 comportant les composés suivants, leurs quantités respectives étant indiquées ci-dessous :

| | |
|---|---|
| - Polyéthersulfone (100 % d'extrait sec) | : 119,1 g |
| - Eau déminéralisée | : 624,0 g |
| - TOTAL | : 743,1 g |

Pour réaliser la composition aqueuse de semi-fini SFC1, on utilise une poudre initiale de polyéthersulfone ayant une granulométrie dont la taille varie de 20 $\mu$m à 10 mm, et plus particulièrement un d90 compris entre 40 et 60 $\mu$m et un d50 compris entre 20 et 40 $\mu$m.
On procède comme suit :

- la poudre de polyéthersulfone est introduite dans un mélangeur ; puis
- l'eau déminéralisée est ajoutée dans le mélangeur ; et enfin
- l'étape de mélange est réalisée.

Les propriétés de la composition aqueuse ainsi obtenue SFC1 sont les suivantes :

- extrait sec théorique : 16,0 %
- extrait sec mesuré dans la composition : 16,3 %
- Il s'agit d'une suspension de couleur blanche opaque.
- Le pH de cette composition est compris entre 6 et 7.
- La composition obtenue SFC1 décante en moins d'une journée.
- La détermination de la taille des particules par diffraction de la lumière à l'aide du granulomètre laser Mastersizer montre que l'on obtient un pic principal en d50 centré sur un diamètre moyen d'environ 20 $\mu$m et un pic principal en d90 centré sur un diamètre moyen d'environ 48 $\mu$m.

**EXEMPLE COMPARATIF 2 d'une composition aqueuse de semi-fini (SFC2)** :

**Préparation d'une composition aqueuse de semi-fini SFC2 avec solvant aprotique polaire et sans amine.**

On réalise une composition aqueuse de semi-fini SFC2 comportant les composés suivants, leurs quantités respectives étant indiquées ci-dessous :

| | |
|---|---|
| - Polyéthersulfone (100 % d'extrait sec) | : 119,1 g |
| - NFM | : 198,5 g |
| - Eau déminéralisée | : 344,5 g |
| - TOTAL | : 662,1 g |

Pour réaliser la composition aqueuse de semi-fini SFC2, on utilise une poudre initiale de granulométrie dont la taille de particules varie de 20 $\mu$m à 10 mm et présentant plus particulièrement un d90 diamètre compris entre 40 et 60 $\mu$m et un diamètre d50 compris entre 20 et 40 $\mu$m.
La mise en suspension de la PES comprend une étape de broyage, le broyage étant réalisé dans un broyeur à billes de marque Discontimill®, à température ambiante pendant une durée pouvant varier entre 15 et 30 heures, de préférence entre 12 et 24 heures pour réduire la taille des particules de PES.
On procède comme suit :

- la poudre de polyéthersulfone est introduite dans le broyeur ; puis
- l'eau déminéralisée est ajoutée dans le broyeur ;
- le solvant est ensuite ajoutée dans le broyeur ; et enfin

- l'étape de broyage est réalisée.

Les propriétés de la composition aqueuse ainsi obtenue SFC2 sont les suivantes :

- extrait sec théorique : 18,0 %
- extrait sec mesuré dans la composition : 18,1 %
- Il s'agit d'une suspension de couleur blanche opaque.
- Le pH de cette composition est compris entre 6 et 7.
- La composition obtenue SFC2 décante en moins d'une journée. Après remise en suspension des particules sous agitation mécanique, on constate une augmentation de la viscosité apparente supérieure à 20 % en moins d'une semaine.

**EXEMPLE 4 d'une composition aqueuse de primaire selon l'invention (P1)** :

**Préparation d'une composition aqueuse de primaire P1 à partir d'une composition de semi-fini à base de polymère aromatique sans solvant aprotique polaire ni amine.**

On réalise une composition aqueuse de semi-fini comportant les composés suivants, leurs quantités respectives étant indiquées ci-après :

| | |
|---|---|
| - Polyéthersulfone (100 % d'extrait sec) | : 119,1 g |
| - Eau déminéralisée | : 624,0 g |
| - TOTAL | : 743,1 g |

Pour réaliser cette composition aqueuse de semi-fini, on utilise une poudre initiale de polyéthersulfone dont la granulométrie varie de 20 $\mu$m à 10 mm, et plus particulièrement un d90 compris entre 40 et 60 $\mu$m et un d50 compris entre 20 et 40 $\mu$m.

La mise en suspension de la PES comprend une étape de broyage, le broyage étant réalisé dans un broyeur à billes de marque Discontimill®, à température ambiante pendant une durée pouvant varier entre 15 et 30 heures, de préférence entre 12 et 24 heures pour réduire la taille des particules de PES.

On procède comme suit :

- la poudre de polyéthersulfone est introduite dans le broyeur ; puis
- l'eau déminéralisée est ajoutée dans le broyeur ; et enfin
- l'étape de broyage est réalisée.

Les propriétés de cette composition aqueuse ainsi obtenue sont les suivantes :

- extrait sec théorique : 16,0 %
- extrait sec mesuré dans la composition : 16,2 %
- Il s'agit d'une suspension de couleur blanche opaque.
- La détermination de la taille des particules par diffraction de la lumière à l'aide du granulomètre laser Mastersizer montre que l'on obtient un pic principal en d50 centré sur un diamètre moyen de 5 à 10 $\mu$m et un d90 de 19 $\mu$m, ce qui confirme la mise en suspension de la totalité de la poudre.

On réalise une composition aqueuse de primaire P1 d'accrochage comportant les composés suivants, leurs quantités respectives étant indiquées ci-dessous :

| | |
|---|---|
| - Dispersion de PTFE | : 30,6 g |
| - Dispersion de noir de carbone | : 5,7 g |
| - Composition de semi-fini | : 33,3 g |
| - NFM | : 10,0 g |
| - Système tensioactif non-ionique | : 4,8 g |
| - Silice colloïdale | : 12,3 g |
| - Eau déminéralisée | : 3,3 g |

(suite)

| | |
|---|---|
| - Total | : 100,0 g |

En ce qui concerne le solvant aprotique polaire non étiqueté dans la composition P1, la teneur en NFM est de 10,0 % en poids par rapport au poids total de la composition P1.

Le taux de résine fluorée dans la composition de primaire P1 sèche est de l'ordre de 63 %.

Les propriétés de la composition de primaire P1 ainsi obtenue sont les suivantes :

- extrait sec théorique dans la composition : 29,4 %
- viscosité (en coupe 2,5 selon la norme DIN EN ISO 2433/ASTM D5125) : 45 s

**EXEMPLE 5 d'une composition aqueuse de primaire selon l'invention (P2)** :

**Préparation d'une composition aqueuse de primaire P2 à partir de la composition de semi-fini SF1 de l'exemple 1.**

On réalise une composition aqueuse de primaire P2 d'accrochage comportant les composés suivants, leurs quantités respectives étant indiquées ci-dessous :

| | |
|---|---|
| - Dispersion de PTFE | : 34,1 g |
| - Dispersion de noir de carbone | : 6,3 g |
| - Composition de semi-fini SF1 (18,2% d'extrait sec) | : 33,4 g |
| - NFM | : 3,3 g |
| - Système tensioactif non-ionique | : 5,3 g |
| - Silice colloïdale | : 13,7 g |
| - Eau déminéralisée | : 3,9 g |
| - Total | : 100,0 g |

En ce qui concerne le solvant aprotique polaire non étiqueté dans la composition P2, la teneur en NFM est de 10,1 % en poids par rapport au poids total de la composition P2.

Le taux de résine fluorée dans la composition de primaire P2 sèche est de l'ordre de 63 %.

Les propriétés de la composition de primaire P2 ainsi obtenue sont les suivantes :

- extrait sec théorique dans la composition : 32,9 %
- viscosité (en coupe 2,5 selon la norme DIN EN ISO 2433/ASTM D5125) : 51 s

**EXEMPLE 6 d'une composition aqueuse de primaire selon l'invention (P3)** :

**Préparation d'une composition aqueuse de primaire P3 à partir de la composition de semi-fini SF2 de l'exemple 2.**

On réalise une composition aqueuse de primaire P3 d'accrochage comportant les composés suivants, leurs quantités respectives étant indiquées ci-dessous :

| | |
|---|---|
| - Dispersion de PTFE | : 34,1 g |
| - Dispersion de noir de carbone | : 6,3 g |
| - Composition de semi-fini SF2 (18,2% d'extrait sec) | : 33,4 g |
| - Système tensioactif non-ionique | : 5,3 g |
| - Silice colloïdale | : 13,7 g |
| - Eau déminéralisée | : 7,2 g |
| - Total | : 100,0 g |

En ce qui concerne le solvant aprotique polaire non étiqueté dans la composition P3, la teneur en NFM est de 5,0 % en poids par rapport au poids total de la composition P3.

Le taux de résine fluorée dans la composition de primaire P3 sèche est de l'ordre de 63 %.

Les propriétés de la composition de primaire P3 ainsi obtenue sont les suivantes :

- extrait sec théorique dans la composition : 32,9 %
- viscosité (en coupe 2,5 selon la norme DIN EN ISO 2433/ASTM D5125) : 52 s

**EXEMPLE 7 d'une composition aqueuse de primaire (P4)** :

**Préparation d'une composition aqueuse de primaire P4 à partir de la composition de semi-fini à base de polymère aromatique sans solvant polaire aprotique ni amine et d'une composition de semi-fini à base de polymère hétérocyclique sans solvant polaire aprotique ni amine.**

On réalise une composition aqueuse de semi-fini à base de polymère aromatique comportant les composés suivants, leurs quantités respectives étant indiquées ci-après :

| | |
|---|---|
| - Polyéthersulfone (100 % d'extrait sec) | : 119,1 g |
| - Eau déminéralisée | : 624,0 g |
| - TOTAL | : 743,1 g |

Pour réaliser cette composition aqueuse de semi-fini, on utilise une poudre initiale de polyéthersulfone dont la granulométrie varie de 20 $\mu$m à 10 mm, et plus particulièrement un d90 compris entre 40 et 60 $\mu$m et un d50 compris entre 20 et 40 $\mu$m.
La mise en suspension de la PES comprend une étape de broyage, le broyage étant réalisé dans un broyeur à billes de marque Discontimill®, à température ambiante pendant une durée pouvant varier entre 15 et 30 heures, de préférence entre 12 et 24 heures pour réduire la taille des particules de PES.
On procède comme suit :

- la poudre de polyéthersulfone est introduite dans le broyeur ; puis
- l'eau déminéralisée est ajoutée dans le broyeur ; et enfin
- l'étape de broyage est réalisée.

Les propriétés de cette composition aqueuse ainsi obtenue sont les suivantes :

- extrait sec théorique : 16,0 %
- extrait sec mesuré dans la composition : 16,2 %
- Il s'agit d'une suspension de couleur blanche opaque.
- La détermination de la taille des particules par diffraction de la lumière à l'aide du granulomètre laser Mastersizer montre que l'on obtient un pic principal en d50 centré sur un diamètre moyen de 5 à 10 $\mu$m et un d90 de 19 $\mu$m, ce qui confirme la mise en suspension de la totalité de la poudre.

On réalise une composition aqueuse de semi-fini à base de polymère hétérocyclique comportant les composés suivants, leurs quantités respectives étant indiquées ci-dessous :

| | |
|---|---|
| - Polyamide acide amique | : 616,0 g |
| - Eau déminéralisée | : 726,3 g |
| - TOTAL | : 1342,3 g |

Pour réaliser cette composition aqueuse de semi-fini, on utilise un système de broyage en jarre de 3 litres pour obtenir une pâte constituée d'une suspension stable de particules de polyamide-acide amique dans de l'eau dont la granulométrie finale est importante pour l'enduction par pulvérisation et l'obtention des propriétés d'adhérence du revêtement obtenu.
On procède comme suit :

- on introduit, dans la jarre, la poudre de polyamide-acide amique, dont la granulométrie initiale varie de quelques centaines de microns au mm ; puis
- on ajoute l'eau déminéralisée ;
- on place la jarre à température ambiante avec le mélange ainsi obtenu et les billes sur des rouleaux pendant la durée nécessaire et suffisante pour réduire la taille des particules de polyamide-acide amique.

Le taux de solvant aprotique polaire toxique dans cette composition de semi-fini, soit la NMP, est inférieur à 2,3 % en poids par rapport au poids total de la composition.

Les propriétés de cette composition aqueuse de semi-fini ainsi obtenue sont les suivantes :

- extrait sec théorique : 16,3 %
- extrait sec mesuré dans la composition : 16,2 %
- Il s'agit d'une suspension de couleur blanc crème.
- La détermination de la taille des particules par diffraction de la lumière à l'aide du granulomètre laser Mastersizer montre que l'on obtient un pic principal en d50 centré sur un diamètre moyen compris entre 5 et 6 μm et un d90 de 19 μm, ce qui confirme la mise en suspension de la totalité de la poudre.

On réalise ensuite une composition aqueuse de primaire P4 d'accrochage comportant les composés suivants, leurs quantités respectives étant indiquées ci-dessous :

| | |
|---|---|
| - Dispersion de PTFE | : 30,8 g |
| - Dispersion de noir de carbone | : 5,7 g |
| - Composition de semi-fini à base de polymère aromatique | : 29,7 g |
| - Composition de semi-fini à base de polymère hétérocyclique | : 3,6 g |
| - NFM | : 10,1g |
| - Système tensioactif non-ionique | : 4,8 g |
| - Silice colloïdale | : 12,3 g |
| - Eau déminéralisée | : 3,0 g |
| - Total | : 100,0 g |

En ce qui concerne le solvant aprotique polaire non étiqueté dans la composition P4, la teneur en NFM est de 10,1 % en poids par rapport au poids total de la composition P4.

En ce qui concerne le solvant aprotique polaire toxique dans la composition P4, la NMP est présente à l'état de traces par rapport à la composition P4 totale (< 0,1%) ; la NMP provient de la composition de semi-fini à base de polymère hétérocyclique.

Le taux de résine fluorée dans la composition de primaire P4 sèche est de l'ordre de 63 %.

Les propriétés de la composition de primaire P4 ainsi obtenue sont les suivantes :

- extrait sec théorique dans la composition : 29,6 %
- viscosité (en coupe 2,5 selon la norme DIN EN ISO 2433/ASTM D5125) : 51 s

**EXEMPLE 8 d'une composition aqueuse de primaire selon l'invention (P5)** :

**Préparation d'une composition aqueuse de primaire P5 à partir de la composition de semi-fini SF3 de l'exemple 3.**

On réalise une composition aqueuse de primaire P5 d'accrochage comportant les composés suivants, leurs quantités respectives étant indiquées ci-dessous :

| | |
|---|---|
| - Dispersion de PTFE | : 34,1 g |
| - Dispersion de noir de carbone | : 6,3 g |
| - Composition de semi-fini SF3 (18,2% d'extrait sec) | : 33,4 g |
| - Système tensioactif non-ionique | : 5,3 g |
| - Silice colloïdale | : 13,7 g |
| - Eau déminéralisée | : 7,2 g |
| - Total | : 100,0 g |

En ce qui concerne le solvant aprotique polaire non étiqueté dans la composition P5, la teneur en NFM est de 5,0 % en poids par rapport au poids total de la composition P5.

Le taux de résine fluorée dans la composition de primaire P5 sèche est de l'ordre de 63 %.

Les propriétés de la composition de primaire P5 ainsi obtenue sont les suivantes :

- extrait sec théorique dans la composition : 33,0 %
- viscosité (en coupe 2,5 selon la norme DIN EN ISO 2433/ASTM D5125) : 51 s

**EXEMPLE 9 d'une composition aqueuse de primaire (P6)** :

**Préparation d'une composition aqueuse de primaire P6 à partir de la composition de semi-fini SF3 de l'exemple 3 et une composition de semi-fini à base de polymère hétérocyclique.**

On réalise une composition aqueuse de semi-fini à base de polymère hétérocyclique comportant les composés suivants, leurs quantités respectives étant indiquées ci-dessous :

| | |
|---|---|
| - Polyamide acide amique | : 616,0 g |
| - Eau déminéralisée | : 726,3 g |
| - TOTAL | : 1342,3 g |

Pour réaliser cette composition aqueuse de semi-fini, on utilise un système de broyage en jarre de 3 litres pour obtenir une pâte constituée d'une suspension stable de particules de polyamide-acide amique dans de l'eau dont la granulométrie finale est importante pour l'enduction par pulvérisation et l'obtention des propriétés d'adhérence du revêtement obtenu.

On procède comme suit :

- on introduit, dans la jarre, la poudre de polyamide-acide amique, dont la granulométrie initiale varie de quelques centaines de microns au mm ; puis
- on ajoute l'eau déminéralisée ;
- on place la jarre à température ambiante avec le mélange ainsi obtenu et les billes sur des rouleaux pendant la durée nécessaire et suffisante pour réduire la taille des particules de polyamide-acide amique.

Le taux de solvant aprotique polaire toxique dans cette composition de semi-fini, soit la NMP, est inférieur à 2,3 % en poids par rapport au poids total de la composition.

Les propriétés de cette composition aqueuse de semi-fini ainsi obtenue sont les suivantes :

- extrait sec théorique : 16,3 %
- extrait sec mesuré dans la composition : 16,2 %
- Il s'agit d'une suspension de couleur blanc crème.
- La détermination de la taille des particules par diffraction de la lumière à l'aide du granulomètre laser Mastersizer montre que l'on obtient un pic principal en d50 centré sur un diamètre moyen compris entre 5 et 6 $\mu$m et un d90 de 19 $\mu$m, ce qui confirme la mise en suspension de la totalité de la poudre.

On réalise ensuite une composition aqueuse de primaire P6 d'accrochage comportant les composés suivants, leurs quantités respectives étant indiquées ci-dessous :

| | |
|---|---|
| - Dispersion de PTFE | : 34,1 g |
| - Dispersion de noir de carbone | : 6,3 g |
| - Composition de semi-fini SF3 (18,2% d'extrait sec) | : 30,0 g |
| - Composition de semi-fini à base de polymère hétérocyclique | : 4,1 g |
| - NFM | : 1,0 g |
| - Système tensioactif non-ionique | : 5,3 g |
| - Silice colloïdale | : 13,7 g |
| - Eau déminéralisée | : 5,5 g |
| - Total | : 100,0 g |

En ce qui concerne le solvant aprotique polaire non étiqueté dans la composition P6, la teneur en NFM est de 5,5 % en poids par rapport au poids total de la composition P6.

En ce qui concerne le solvant aprotique polaire toxique dans la composition P6, la NMP est présente à l'état de traces par rapport à la composition P6 totale (< 0,1%) ; la NMP provient de la composition de semi-fini à base de polymère hétérocyclique.

Le taux de résine fluorée dans la composition de primaire P6 sèche est de l'ordre de 62 %.

Les propriétés de la composition de primaire P6 ainsi obtenue sont les suivantes :

- extrait sec théorique dans la composition : 32,9 %
- viscosité (en coupe 2,5 selon la norme DIN EN ISO 2433/ASTM D5125) : 50 s

## EXEMPLE COMPARATIF 3 d'une composition aqueuse de primaire (PC1) :

**Préparation d'une composition aqueuse de primaire PC1 à partir d'une composition de semi-fini à base de polymère aromatique sans solvant aprotique polaire ni amine.**

On réalise une composition de primaire PC1 d'accrochage comportant les composés suivants, leurs quantités respectives étant indiquées ci-dessous :

| | |
|---|---|
| - Dispersion de PTFE | : 30,6 g |
| - Dispersion de noir de carbone | : 5,7 g |
| - Composition de semi-fini | : 33,3 g |
| - Système tensioactif non-ionique | : 4,8 g |
| - Silice colloïdale | : 12,3 g |
| - Eau déminéralisée | : 13,3 g |
| - Total | : 100,0 g |

Le taux de résine fluorée dans la composition de primaire PC1 sèche est de l'ordre de 63 %.

Les propriétés de la composition de primaire PC1 ainsi obtenues sont les suivantes :

- extrait sec théorique dans la composition : 29,4 %
- viscosité (en coupe 2,5 selon la norme DIN EN ISO 2433/ASTM D5125) : 48 s

## EXEMPLE COMPARATIF 4 d'une composition aqueuse de primaire (PC2) :

**Préparation d'une composition aqueuse de primaire PC2 à partir de la composition de semi-fini SFC1 de l'exemple comparatif 1.**

On réalise une composition aqueuse de primaire PC2 d'accrochage comportant les composés suivants, leurs quantités respectives étant indiquées ci-dessous :

| | |
|---|---|
| - Dispersion de PTFE | : 30,6 g |
| - Dispersion de noir de carbone | : 5,7 g |
| - Composition de semi-fini SFC1 (16,0% d'extrait sec) | : 33,3 g |
| - NFM | : 11,0 g |
| - Système tensioactif non-ionique | : 4,8 g |
| - Silice colloïdale | : 12,3 g |
| - Eau déminéralisée | : 2,3 g |
| - Total | : 100,0 g |

En ce qui concerne le solvant aprotique polaire non étiqueté dans la composition PC2, la teneur en NFM est de 11,0 % en poids par rapport au poids total de la composition PC2.

Le taux de résine fluorée dans la composition de primaire PC2 sèche est de l'ordre de 63 %.

Les propriétés de la composition de primaire PC2 ainsi obtenue sont les suivantes :

- extrait sec théorique dans la composition : 29,5 %
- viscosité (en coupe 2,5 selon la norme DIN EN ISO 2433/ASTM D5125) : 48 s

**EXEMPLE COMPARATIF 5 d'une composition aqueuse de primaire (PC3)** :

**Préparation d'une composition aqueuse de primaire PC3 à partir de la composition de semi-fini SFC2 de l'exemple comparatif 2.**

On réalise une composition aqueuse de primaire PC3 d'accrochage comportant les composés suivants, leurs quantités respectives étant indiquées ci-après :

| | |
|---|---|
| - Dispersion de PTFE | : 29,7 g |
| - Dispersion de noir de carbone | : 5,5 g |
| - Composition de semi-fini SFC2 (18,0 % d'extrait sec) | : 28,6 g |
| - NFM | : 17,7 g |
| - Système tensioactif non-ionique | : 4,6 g |
| - Silice colloïdale | : 11,9 g |
| - Eau déminéralisée | : 2,0 g |
| - Total | : 100,0 g |

En ce qui concerne le taux de solvant aprotique polaire non étiqueté dans la composition PC3, la teneur en NFM est de 26,3 % en poids par rapport au poids total de la composition PC3.

Le taux de résine fluorée dans la composition de primaire PC3 sèche est de l'ordre de 63 %.

Les propriétés de la composition de primaire PC3 ainsi obtenue sont les suivantes :

- **-** extrait sec théorique dans la composition : 28,5 %
- **-** viscosité (en coupe 2,5 selon la norme DIN EN ISO 2433/ASTM D5125) : 47 s.

RESULTATS DES TESTS REALISES

Les compositions de semi-fini et de primaire précédemment décrites sont listées dans les tableaux 1 et 2 ci-après.

Les compositions de primaire sont évaluées quant à leur stabilité en termes de viscosité.

Les revêtements obtenus à partir de ces différentes compositions sont soumis aux tests d'adhérence du primaire sur le substrat, au test de coloration et au test de résistance à la corrosion.

Il est observé que les compositions de primaire selon l'invention sont stables dans le temps et permettent d'obtenir des revêtements résistants à la corrosion ; ces compositions de primaire présentent donc de bonnes propriétés de filmification.

La coloration du revêtement appréciée visuellement permet de valider que les formules réalisées selon l'invention présente des jaunissements nuls à faibles acceptables en comparaison avec les formulations traditionnelles incorporant des bases de Lewis.

L'adhérence du revêtement est assurée lorsque la taille de la poudre est conforme à l'invention.

Tableau 1

| | | | | | | | |
|---|---|---|---|---|---|---|---|
| **S E M I - F I N I** | **Composition de semi-fini** | - | **SF1** | **SF2** | - | **SF3** | **SF3 et PAA poudre** |
| | | - | Ex.1 | Ex.2 | - | Ex.3 | Ex.3 |
| | **Type de résine** | PES poudre | PES poudre | PES poudre | PAI et PES poudre | PES et PPS poudre | PES, PPS et PAI poudre |
| | **Type d' amine** | 0 | 0 | 0 | 0 | 0 | 0 |
| | **Taille des particules de résine** | d90<20µm d50<10µm | d90<20µm d50<10µm | d90<20µm d50<10µm | d90<20µm d50<10µm | d90<20µm d50<10µm | d90<20µm d50<10µm |
| | **Solvant aprotique polaire** | 0 | NFM=20,3% | NFM=14,9% | NMP<2,3% dans PAI | NFM=14,9% | NFM=14,9% dans SF5 et NMP<2.3% |
| **P R I M A I R E** | **Composition de primaire** | **P1** | **P2** | **P3** | **P4** | **P5** | **P6** |
| | | Ex.4 | Ex.5 | Ex.6 | Ex.7 | Ex.8 | Ex.9 |
| | **Solvant aprotique polaire étiqueté** | 0 | 0 | 0 | NMP<0,1% | 0 | NMP<0,1% |
| | **Solvant aprotique polaire non étiqueté** | NFM=10,0% | NFM=10,1% | NFM=5,0% | NFM=10,1% | NFM=5,0% | NFM=5,5% |
| | **Etiquetage du primaire** | NON | NON | NON | NON | NON | NON |
| **T E S T S** | **Coloration du revêtement** | Aucune | Aucune | Aucune | Jaunissement très faible | Jaunissement très faible | Jaunissement très faible |
| | **Test d' adhérence sur substrat Alu lisse** | Excellente | Excellente | Excellente | Excellente | Excellente | Excellente |
| | **Stabilité** | Conforme | Conforme | Conforme | Conforme | Conforme | Conforme |
| | **Résistance à la corrosion** | Conforme (cotation 100) | Conforme (cotation 100) | Conforme (cotation 100) | Conforme (cotation 100) | Conforme (cotation 100) | Conforme (cotation 100) |

<u>Tableau 2</u>

|  |  | | | |
|---|---|---|---|---|
| **SEMI-FINI** | Composition de semi-fini | SFC2 / ExC.2 | SFC1 / ExC.1 | - / - |
|  | Type de résine | PES poudre | PES poudre | PES poudre |
|  | Type d'amine | 0 | 0 | 0 |
|  | Taille des particules de résine | d90<20µm d50<10µm | d90>20µm | d90<20µm d50<10µm |
|  | Solvant aprotique polaire | NFM=30,0% | 0 | 0 |
| **PRIMAIRE** | Composition de primaire | PC3 / ExC.5 | PC2 / ExC.4 | PC1 / ExC.3 |
|  | Solvant aprotique polaire étiqueté | 0 | 0 | 0 |
|  | Solvant aprotique polaire non étiqueté | NFM=26,3 | NFM=11,0% | 0 |
|  | Etiquetage du primaire | NON | NON | NON |
| **TESTS** | Coloration du revêtement | Aucune | Aucune | Aucune |
|  | Test d'adhérence sur substrat Alu lisse | Mauvaise | Mauvaise | Mauvaise |
|  | Stabilité | Non conforme | Non conforme | Non conforme |
|  | Résistance à la corrosion | Très mauvais (cotation 0) | Conforme (cotation 100) | Très mauvais (cotation 0) |

## Revendications

**1.** Composition aqueuse de revêtement antiadhésif exempte d'amines, **caractérisée en ce qu'**elle comprend une composition aqueuse pour revêtement et au moins une résine fluorocarbonée, la composition aqueuse de revêtement antiadhésif comprenant une teneur en solvant aprotique polaire supérieure à 0 % et inférieure ou égale à 15 % en poids par rapport au poids total de la composition de revêtement antiadhésif, ledit solvant aprotique polaire étant la N-formylmorpholine, dans laquelle la composition aqueuse pour revêtement comprend :

- au moins un polymère aromatique sélectionné dans le groupe comprenant les polyéthers sulfones (PES), les polyéthers éthers sulfones (PEES), les polyphényles sulfones (PPSU), les polysulfures de phénylène (PPS), les polyéthers éthers cétones (PEEK), les polyéthers cétones (PEK), les polyéthers cétones cétones (PEKK), les polyéthers éthers cétones cétones (PEEKK), les polyéthers cétones éthers cétones cétones (PEKEKK) et les dérivés de ceux-ci, et se présentant sous forme de poudre ayant un $d_{90}$ inférieur ou égal à 20 $\mu$m ; et éventuellement
- un solvant aprotique polaire, la teneur en solvant aprotique polaire dans la composition pour revêtement étant comprise entre 0 et 25 % en poids par rapport au poids total de la composition pour revêtement ; et

**caractérisée en ce que** :

- le solvant aprotique polaire est la N-formylmorpholine ;
- le polymère aromatique se présente sous forme de poudre ayant un $d_{90}$ minimum de 10 $\mu$m et inférieur ou égal à 20 $\mu$m et un $d_{50}$ minimum de 3 $\mu$m où $d_{90}$ s'entend de la dimension telle que 90 % en volume de la population est constitué de particules de taille inférieure à ladite dimension et $d_{50}$ s'entend de la dimension telle que 50 % en volume de la population est constitué de particules de taille inférieure à ladite dimension.

2. Procédé de préparation d'une composition aqueuse de revêtement antiadhésif exempte d'amines selon la revendication 1 **caractérisé en ce que** le procédé comprend le mélange d'une résine fluorocarbonée avec une composition aqueuse pour revêtement comprenant :

- au moins un polymère aromatique sélectionné dans le groupe comprenant les polyéthersulfones (PES), les polyétheréthersulfones (PEES), les polyphénylesulfones (PPSU), les polysulfures de phénylène (PPS), les polyétheréthercétones (PEEK), les polyéthercétones (PEK), les polyéthercétonecétones (PEKK), les polyétheréthercétonecétones (PEEKK), les polyéthercétonéthercétonecétones (PEKEKK), et les dérivés de ceux-ci, et se présentant sous forme de poudre ayant un $d_{90}$ minimum de 10 $\mu$m et inférieur ou égal à 20 $\mu$m et un $d_{50}$ minimum de 3 $\mu$m où $d_{90}$ s'entend de la dimension telle que 90 % en volume de la population est constitué de particules de taille inférieure à ladite dimension et $d_{50}$ s'entend de la dimension telle que 50 % en volume de la population est constitué de particules de taille inférieure à ladite dimension ; et
- un solvant aprotique polaire, ledit solvant aprotique polaire étant la N-formylmorpholine, la teneur en solvant aprotique polaire dans la composition pour revêtement étant comprise entre 0 et 25 % en poids par rapport au poids total de la composition pour revêtement.

3. Procédé de préparation selon la revendication 2 dans lequel la composition aqueuse pour revêtement est préparée par un procédé comprenant les étapes suivantes :

a) la fourniture d'au moins un polymère aromatique sous forme de poudre, le polymère aromatique étant sélectionné dans le groupe comprenant les polyéthersulfones (PES), les polyétheréthersulfones (PEES), les polyphénylesulfones (PPSU), les polysulfures de phénylène (PPS), les polyétheréthercétones (PEEK), les polyéthercétones (PEK), les polyéthercétonecétones (PEKK), les polyétheréthercétonecétones (PEEKK), les polyéthercétonéthercétonecétones (PEKEKK), et les dérivés de ceux-ci,
b) la préparation d'un mélange comprenant de l'eau et la poudre de l'étape a), et
c) le broyage du mélange issu de l'étape b) pour obtenir un mélange broyé comprenant le polymère aromatique sous forme de poudre dont le $d_{90}$ est minimum de 10 $\mu$m et inférieur ou égal à 20 $\mu$m et un $d_{50}$ minimum de 3 $\mu$m où $d_{90}$ s'entend de la dimension telle que 90 % en volume de la population est constitué de particules de taille inférieure à ladite dimension et dso s'entend de la dimension telle que 50 % en volume de la population est constitué de particules de taille inférieure à ladite dimension,

dans lequel du solvant aprotique polaire est ajouté lors de la préparation de l'étape b) et/ou au mélange broyé issu de l'étape c), la teneur en solvant aprotique polaire dans la composition pour revêtement étant supérieure à 0 % et inférieure ou égale à 25 % en poids par rapport au poids total de ladite composition, ledit solvant aprotique étant la N-formylmorpholine.

4. Procédé de fabrication d'un article comprenant les étapes suivantes :

i. la fourniture d'un substrat métallique présentant deux faces opposées ;
ii. l'application, sur l'une des faces dudit substrat, d'au moins une couche de composition de revêtement antiadhésif selon la revendication 1 ou telle que préparée selon le procédé de la revendication 3 ; et
iii. la cuisson de l'ensemble à une température comprise entre 300°C et 430°C.

**Patentansprüche**

1. Wässrige Antihaftbeschichtungszusammensetzung ohne Amine, **dadurch gekennzeichnet, dass** sie eine wässrige Beschichtungszusammensetzung und mindestens ein Fluorkohlenstoffharz umfasst, wobei die wässrige Antihaftbeschichtungszusammensetzung einen Gehalt an polarem aprotischem Lösungsmittel von über 0 und unter oder gleich 15 Gew.-% im Verhältnis zum Gesamtgewicht der Antihaftbeschichtungszusammensetzung umfasst, wobei das polare aprotische Lösungsmittel N-Formylmorpholin ist, wobei die wässrige Beschichtungszusammensetzung umfasst:

- mindestens ein aromatisches Polymer, das aus der Gruppe ausgewählt ist, die die Polyethersulfone (PES), die Polyetherethersulfone (PEES), die Polyphenylsulfone (PPSU), die Polyphenylensulfide (PPS), die Polyetheretherketone (PEEK), die Polyetherketone (PEK), die Polyetherketonketone (PEKK), die Polyetheretherketonketone (PEEKK), die Polyetherketonetheretherketonketone (PEKEKK) und die Derivate derselben umfasst und in Form eines Pulvers mit einem $d_{90}$ unter oder gleich 20 $\mu$m vorliegen; und gegebenenfalls
- ein polares aprotisches Lösungsmittel, wobei der Gehalt an polarem aprotischen Lösungsmittel in der Beschichtungszusammensetzung zwischen 0 und 25 Gew.-% im Verhältnis zum Gesamtgewicht der Beschichtungszusammensetzung beträgt; und

**dadurch gekennzeichnet, dass**:

- das polare aprotische Lösungsmittel N-Formylmorpholin ist;
- das aromatische Polymer in Form eines Pulvers mit einem Mindest-$d_{90}$ von 10 $\mu$m und unter oder gleich 20 $\mu$m und einem Mindest-$d_{50}$ von 3 $\mu$m vorliegt, wobei sich $d_{90}$ abmessungsmäßig derart versteht, dass 90 Vol.-% der Population aus Partikeln mit einer Größe besteht, die kleiner als die Abmessung ist und sich $d_{50}$ abmessungsmäßig derart versteht, dass 50 Vol.-% der Population aus Partikeln mit einer Größe besteht, die kleiner als die Abmessung ist.

2. Verfahren zur Herstellung einer wässrigen Antihaftbeschichtungszusammensetzung ohne Amine nach Anspruch 1, **dadurch gekennzeichnet, dass** das Verfahren das Mischen eines Fluorkohlenstoffharzes mit einer wässrigen Beschichtungszusammensetzung umfasst, umfassend:

- mindestens ein aromatisches Polymer, das aus der Gruppe ausgewählt ist, die die Polyethersulfone (PES), die Polyetherethersulfone (PEES), die Polyphenylsulfone (PPSU), die Polyphenylensulfide (PPS), die Polyetheretherketone (PEEK), die Polyetherketone (PEK), die Polyetherketonketone (PEKK), die Polyetheretherketonketone (PEEKK), die Polyetherketonetheretherketonketone (PEKEKK) und die Derivate derselben umfasst und in Form eines Pulvers mit einem Mindest-$d_{90}$ von 10 $\mu$m und unter oder gleich 20 $\mu$m und einem Mindest-$d_{50}$ von 3 $\mu$m vorliegen, wobei sich $d_{90}$ abmessungsmäßig derart versteht, dass 90 Vol.-% der Population aus Partikeln mit einer Größe besteht, die kleiner als die Abmessung ist und sich $d_{50}$ abmessungsmäßig derart versteht, dass 50 Vol.-% der Population aus Partikeln mit einer Größe besteht, die kleiner als die Abmessung ist; und
- ein polares aprotisches Lösungsmittel, wobei das polare aprotische Lösungsmittel N-Formylmorpholin ist, wobei der Gehalt an polarem aprotischem Lösungsmittel in der Beschichtungszusammensetzung zwischen 0 und 25 Gew.-% im Verhältnis zum Gesamtgewicht der Beschichtungszusammensetzung beträgt.

3. Herstellungsverfahren nach Anspruch 2, wobei die wässrige Beschichtungszusammensetzung anhand eines Verfahrens hergestellt wird, das die folgenden Schritte umfasst:

a) das Bereitstellen von mindestens einem aromatischen Polymer in Pulverform, wobei das aromatische Polymer aus der Gruppe ausgewählt ist, die die Polyethersulfone (PES), die Polyetherethersulfone (PEES), die Polyphenylsulfone (PPSU), die Polyphenylensulfide (PPS), die Polyetheretherketone (PEEK), die Polyetherketone (PEK), die Polyetherketonketone (PEKK), die Polyetheretherketonketone (PEEKK), die Polyetherketonetheretherketonketone (PEKEKK) und die Derivate derselben umfasst,
b) das Herstellen eines Gemischs, das Wasser und das Pulver von Schritt a) umfasst, und
c) das Zerkleinern des Gemischs aus Schritt b), um ein zerkleinertes Gemisch zu erhalten, das das aromatische Polymer in Pulverform umfasst, dessen $d_{90}$ mindestens 10 $\mu$m beträgt und kleiner oder gleich 20 $\mu$m ist und ein Mindest-$d_{50}$ von 3 um, wobei sich $d_{90}$ abmessungsmäßig derart versteht, dass 90 Vol.-% der Population aus Partikeln mit einer Größe besteht, die kleiner als die Abmessung ist und sich $d_{50}$ abmessungsmäßig derart versteht, dass 50 Vol.-% der Population aus Partikeln mit einer Größe besteht, die kleiner als die Abmessung ist,

wobei polares aprotisches Lösungsmittel bei der Herstellung von Schritt b) und/oder dem zerkleinerten Gemisch aus Schritt c) hinzugefügt wird, wobei der Gehalt an polarem aprotischem Lösungsmittel in der Beschichtungszusammensetzung größer als 0 und kleiner oder gleich 25 Gew.-% im Verhältnis zum Gesamtgewicht der Zusammensetzung ist, wobei das aprotische Lösungsmittel N-Formylmorpholin ist.

4. Verfahren zur Herstellung eines Artikels, das die folgenden Schritte umfasst:

   i. das Bereitstellen eines metallischen Substrats, das zwei gegenüberliegende Flächen aufweist;
   ii. das Auftragen auf einer der Flächen des Substrats von mindestens einer Schicht einer Antihaftbeschichtungszusammensetzung nach Anspruch 1 oder derart, wie gemäß dem Verfahren von Anspruch 3 hergestellt, und
   iii. das Erhitzen der Anordnung auf eine Temperatur zwischen 300°C und 430°C.

**Claims**

1. An aqueous amine-free non-stick coating composition, **characterised in that** it comprises an aqueous coating composition and at least one fluorocarbon resin, the aqueous non-stick coating composition having a polar aprotic solvent content greater than 0% and less than or equal to 15% by weight with respect to the total weight of the non-stick coating composition, said polar aprotic solvent being N-formylmorpholine, wherein the aqueous coating composition comprises:

   - at least one aromatic polymer, selected from the group comprising polyethersulfones (PES), polyether ether sulfones (PEES), polyphenylsulfones (PPSU), polyphenylene sulfides (PPS), polyether ether ketones (PEEK), polyether ketones (PEK), polyether ketone ketones (PEKK), polyether ether ketone ketones (PEEKK), polyether ketone ether ketone ketones (PEKEKK) and derivatives thereof, and being in powder form having a $d_{90}$ less than or equal to 20 $\mu$m; and optionally
   - a polar aprotic solvent, the polar aprotic solvent content in the coating composition being between 0 and 25% by weight with respect to the total weight of the coating composition; and

   **characterised in that**:

   - the polar aprotic solvent is N-formylmorpholine;
   - the aromatic polymer is in powder form having a minimum $d_{90}$ of 10 $\mu$m and less than or equal to 20 $\mu$m and a minimum $d_{50}$ of 3 $\mu$m, where $d_{90}$ refers to the size at which 90% by volume of the population consists of particles that are smaller than said size and $d_{50}$ refers to the size at which 50% by volume of the population consists of particles that are smaller than said size.

2. A method for preparing an aqueous amine-free non-stick coating composition according to claim 1, **characterised in that** the method comprises mixing a fluorocarbon resin with an aqueous coating composition comprising:

   - at least one aromatic polymer selected from the group comprising polyethersulfones (PES), polyether ether sulfones (PEES), polyphenylsulfones (PPSU), polyphenylene sulfides (PPS), polyether ether ketones (PEEK), polyether ketones (PEK), polyether ketone ketones (PEKK), polyether ether ketone ketones (PEEKK), polyether ketone ether ketone ketones (PEKEKK) and derivatives thereof, and being in powder form having a minimum $d_{90}$ of 10 $\mu$m and less than or equal to 20 $\mu$m and a minimum $d_{50}$ of 3 $\mu$m where $d_{90}$ refers to the size at which 90% by volume of the population consists of particles that are smaller than said size and $d_{50}$ refers to the size at which 50% by volume of the population consists of particles that are smaller than said size; and
   - a polar aprotic solvent, said polar aprotic solvent being N- formylmorpholine, the polar aprotic solvent content in the coating composition being between 0 and 25% by weight with respect to the total weight of the coating composition.

3. The preparation method according to claim 2, wherein the aqueous coating composition is prepared by a method comprising the following steps:

   a) providing at least one aromatic polymer in powder form, the aromatic polymer being selected from the group comprising polyethersulfones (PES), polyether ether sulfones (PEES), polyphenylsulfones (PPSU), polyphenylene sulfides (PPS), polyether ether ketones (PEEK), polyether ketones (PEK), polyether ketone ketones (PEKK), polyether ether ketone ketones (PEEKK), polyether ketone ether ketone ketones (PEKEKK) and derivatives thereof,
   b) preparing a mixture comprising water and the powder of step a), and
   c) grinding the mixture resulting from step b) to obtain a ground mixture comprising the aromatic polymer in powder form having a minimum $d_{90}$ of 10 $\mu$m and less than or equal to 20 $\mu$m and a minimum $d_{50}$ of 3 $\mu$m,

where $d_{90}$ refers to the size at which 90% by volume of the population consists of particles that are smaller than said size and $d_{50}$ refers to the size at which 50% by volume of the population consists of particles that are smaller than said size,

wherein the polar aprotic solvent is added during the preparation of step b) and/or to the ground mixture resulting from step c), the polar aprotic solvent content in the coating composition being greater than 0% and less than or equal to 25% by weight with respect to the total weight of said composition, said aprotic solvent being N-formylmorpholine.

4. A method for manufacturing an item, comprising the following steps:

    i. providing a metal substrate having two opposite faces;
    ii. applying, on one of the faces of said substrate, at least one layer of non-stick coating composition according to claim 1 or as prepared according to the method of claim 3; and
    iii. curing the assembly at a temperature between 300°C and 430°C.

**EP 3 158 009 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1103582 A
- US 5910558 A
- US 6333372 B